# EUROPÄISCHE PATENTSCHRIFT

(11) **EP 3 114 061 B1**
(45) Veröffentlichungstag und Bekanntmachung des Hinweises auf die Patenterteilung: **08.05.2019**
(21) Anmeldenummer: 15707952.6
(22) Anmeldetag: 05.03.2015
(51) Int. Cl.: B65G 59/06

(54) **VORRICHTUNG UND VERFAHREN ZUR VEREINZELUNG EINES KARTENKÖRPERS**
DEVICE AND METHOD FOR INDIVIDUALIZING A CARDBOARD ELEMENT
DISPOSITIF ET PROCÉDÉ POUR SÉPARER UN CORPS DE CARTE

(30) Priorität: 07.03.2014 DE 102014204182
(43) Veröffentlichungstag der Anmeldung: 11.01.2017
(73) Patentinhaber: Bundesdruckerei GmbH, 10969 Berlin (DE)
(72) Erfinder: PEINZE, Franziska, 12589 Berlin (DE); DRESSEL, Olaf, 14641 Wustermark (DE)
(74) Vertreter: Ramrath, Lukas
(86) Internationale Anmeldenummer: PCT/EP2015/054584
(87) Internationale Veröffentlichungsnummer: WO 2015/132330

(56) Entgegenhaltungen:
- GB-A- 1 521 823
- NL-A- 6 612 445
- US-A- 2 691 379

## Beschreibung

Die Erfindung betrifft eine Vorrichtung und ein Verfahren zur Vereinzelung eines Kartenkörpers aus einem Kartenkörperstapel.

Bei der Herstellung von Kartenkörpern, z.B. Identitätskarten, kann es erforderlich sein, einen Kartenkörper aus einem Kartenkörperstapel zu vereinzeln, beispielsweise um diesen vereinzelten Kartenkörper einer Druckeinrichtung zuzuführen.

Werden Karten von einem Stapel z.B. abgezogen, so besteht die Gefahr der Entstehung von Kratzern. Kratzer entstehen insbesondere, wenn am Kartenrand durch die Vereinzelung der Karten Erhöhungen entstehen oder vorhanden sind. Diese Kratzer können sich dann über die ganze Oberfläche einer Karte erstrecken und können dazu führen, dass zum einen das Aussehen beeinträchtigt ist und zum anderen auch in oder auf dem Kartenkörper enthaltenen Informationen, z.B. Personalisierungsdaten, schwerer erfassbar sind. Hierdurch kann eine Verifikation erschwert werden. Durch derart verkratzte Karten wird also ein Ausschuss bei der Herstellung erhöht.

Die EP 0 705 780 A1 offenbart eine Vorrichtung zur Vereinzelung von Karten, wie z.B. Kreditkarten oder Scheckkarten, umfassend mindestens ein Magazin zur Aufbewahrung von Karten in einem Kartenstapel, eine Entnahmeeinrichtung und eine Rückhalteeinrichtung. Allerdings ist es gemäß der in der Druckschrift offenbarten Lehre erforderlich, dass das Magazin Mittel aufweist, die eine lagefixierte Anordnung der Karten im Magazin derart gewährleisten, dass die Karten einzeln oder in Kartengruppen im Magazin in einem definierten Winkel gegeneinander verdreht sind, sodass sich zwischen zwei aufeinanderfolgenden Karten oder Kartengruppen vorstehende Flächen ergeben. Die DE 24 45 338 A1 offenbart eine Vorrichtung zur Einzelabgabe von übereinander angeordneten, im Wesentlichen plattenförmigen Gegenständen.

Die NL 6 612 445 A offenbart ein Verfahren und eine Anordnung zum Ausheben von unrunden Deckeln nach dem Oberbegriff des Anspruchs 1.

Die GB 1 521 823 A offenbart eine Vorrichtung zur Bereitstellung eines Batterieelements aus Platten und Separatoren.

Es stellt sich das technische Problem, ein Verfahren und eine Vorrichtung zur Vereinzelung eines Kartenkörpers aus einem Kartenkörperstapel zu schaffen, welche eine zuverlässige Vereinzelung ermöglichen und gleichzeitig eine einfachere Anordnung der Karten im Kartenkörperstapel ermöglichen.

Die Lösung des technischen Problems ergibt sich durch die Gegenstände mit den Merkmalen der Ansprüche 1 und 11. Weitere vorteilhafte Ausgestaltungen der Erfindung ergeben sich aus den Unteransprüchen.

Es ist eine Grundidee der Erfindung, in einem Zwischenraum eine Einlassöffnung für den Kartenkörper und eine Auslassöffnung für den Kartenkörper bereitzustellen, wobei die Auslassöffnung gegenüber der Einlassöffnung verdreht und/oder verschoben ist, wobei weiter ein Betätigungsmittel vorgesehen ist, welches den Kartenkörper aus einer durch die Einlassöffnung festgelegte Einlasslage in eine durch die Auslassöffnung festgelegte Auslasslage verschiebt und/oder verdreht, wobei der Kartenkörper durch das Verschieben und/oder Verdrehen aus der Einlass- in die Auslasslage vereinzelt wird.

Vorgeschlagen wird eine Vorrichtung zur Vereinzelung eines Kartenkörpers aus einem Kartenkörperstapel. Der Kartenkörper kann insbesondere ein Kartenkörper eines fertig hergestellten oder noch herzustellenden Wert- und/oder Sicherheitsdokuments sein. So kann der Kartenkörper beispielsweise ein Kreditkartenkörper oder Scheckkartenkörper oder ein Ausweiskartenkörper oder Ähnliches sein.

Der Kartenkörperstapel kann mehrere übereinander gestapelte Kartenkörper aufweisen. Insbesondere können die Kartenkörper im Kartenkörperstapel nicht relativ zueinander verdreht und verschoben sein. Dies kann bedeuten, dass Mittellinien, die senkrecht zu einer Kartenoberfläche verlaufen, der Kartenkörper im Kartenkörperstapel konzentrisch zueinander sind, d.h. sich überlagern, und alle Kartenkörper die gleiche Ausrichtung aufweisen.

Die Vorrichtung weist eine Einlassöffnung auf. Die Einlassöffnung kann insbesondere eine ortsfest angeordnete Einlassöffnung sein. Insbesondere kann ein Einlasskörper die Einlassöffnung aufweisen, die insbesondere als Durchlassöffnung ausgebildet sein kann. Entlang einer Transportrichtung bzw. Einlassrichtung eines zu vereinzelnden Kartenkörpers kann die Einlassöffnung auf die weiteren Kartenkörper des Kartenkörperstapels folgen. Die Transportrichtung kann eine Richtung entlang einer Trajektorie bezeichnen, die ein Kartenkörper beim Vereinzeln durchläuft. Entlang der Trajektorie kann sich die Transportrichtung, insbesondere auch sprungartig, verändern. Die Einlassrichtung kann hierbei die Transportrichtung in einem Teilabschnitt der Trajektorie bezeichnen, in dem der Kartenköper durch die Einlassöffnung in den ersten Zwischenraum eingeführt wird. Ist die Transportrichtung bzw. Einlassrichtung parallel zu einer Gravitationsrichtung, so können die weiteren Kartenkörper des Kartenkörperstapels über der Einlassöffnung angeordnet sein. Somit kann der vorhergehend erläuterte Einlasskörper ein Magazin oder Aufnahmevolumen für den Kartenkörperstapel ausbilden oder aufweisen.

Weiter weist die Vorrichtung mindestens ein Betätigungsmittel zur Betätigung des zu vereinzelnden Kartenkörpers auf. Dies wird nachfolgend näher erläutert.

Weiter weist die Vorrichtung eine erste Auslassöffnung auf. Auch die erste Auslassöffnung kann insbesondere eine ortsfest angeordnete Auslassöffnung sein. Hierbei kann ein Auslasskörper die erste Auslassöffnung ausbilden oder aufweisen, wobei die erste Auslassöffnung insbesondere eine Durchgangsöffnung sein kann.

Die erste Auslassöffnung kann entlang der Trajektorie nach der Einlassöffnung angeordnet sein. Somit kann die Auslassöffnung in Gravitationsrichtung beispielsweise unter der Einlassöffnung angeordnet sein. Wie nachfolgend näher erläutert schließt dies jedoch nicht aus, dass die Einlassöffnung und die erste Auslassöffnung relativ zueinander verschoben und/oder verdreht sind.

Zwischen der Einlassöffnung und der ersten Auslassöffnung ist ein erster Zwischenraum angeordnet. Eine Höhe des ersten Zwischenraums in Transportrichtung oder Einlassrichtung kann größer als eine oder gleich einer Dicke des Kartenkörpers sein, wobei die Dicke des Kartenkörpers in Transportrichtung bzw. entlang einer Mittellinie, die eine Oberfläche des Kartenkörpers senkrecht schneidet, gemessen werden kann. Vorzugsweise ist die Höhe des ersten Zwischenraums in Transportrichtung bzw. Einlassrichtung größer als eine Dicke des Kartenkörpers, jedoch kleiner als eine zweifache Dicke des Kartenkörpers. Die Höhe des ersten Zwischenraums kann einem Abstand der Einlassöffnung und der ersten Auslassöffnung in Transportrichtung bzw. Einlassrichtung entsprechen. Für eine Karte im ID1 Format nach ISO 7810 und 7813 ergibt sich die Dicke des Kartenkörpers zu 0,76 ± 0,08 mm und liegt somit zwischen 0,68 mm und 0,84 mm. Die Höhe des Zwischenraums ist somit für eine Karte im ID1-Format vorzugsweise größer als 0,84 mm und kleiner als 1,36 mm, besonders bevorzugt liegt die Höhe zwischen 1,0 mm und 1,2 mm.

Die Einlassöffnung legt eine Einlasslage im ersten Zwischenraum fest. Die Einlasslage bezeichnet hierbei eine Position und/oder Orientierung oder einen Positions- und/oder Orientierungsbereich des zu vereinzelnden Kartenkörpers im ersten Zwischenraum. Dass durch die Einlassöffnung die Einlasslage festgelegt ist, bedeutet, dass ein in Transportrichtung durch die Einlassöffnung in den ersten Zwischenraum eingeführter Kartenkörper die Einlasslage aufweist.

Die Einlassöffnung kann insbesondere vorbestimmte Dimensionen aufweisen, insbesondere eine vorbestimmte Länge und eine vorbestimmte Breite. Die vorbestimmte Dimension kann hierbei an Dimensionen des zu vereinzelnden Kartenkörpers angepasst werden. Beispielsweise können die Dimensionen der Einlassöffnung um ein vorbestimmtes (geringes) Maß größer gewählt werden als die korrespondierenden Dimensionen des zu vereinzelnden Kartenkörpers. Auch können die Dimensionen der Einlassöffnung derart gewählt werden, dass ein in Transportrichtung durch die Einlassöffnung in den ersten Zwischenraum eingeführter Kartenkörper nur eine vorbestimmte Einlasslage oder eine Einlasslage aus einem Bereich vorbestimmter Einlasslagen aufweisen kann.

Weiter legt die erste Auslassöffnung eine Auslasslage im ersten Zwischenraum fest. Die Auslasslage kann insbesondere eine Lage eines Kartenkörpers bezeichnen, aus der der Kartenkörper, insbesondere in Transportrichtung, durch die erste Auslassöffnung mit einer Auslassrichtung aus dem ersten Zwischenraum ausführbar ist. Insbesondere kann die erste Auslassöffnung genau eine Auslasslage oder eine Auslasslage aus einem Bereich vorbestimmter Auslasslagen festlegen. Die Einlass- und Auslassrichtung können parallel zueinander sein.

Weiter ist die Einlasslage im ersten Zwischenraum ungleich der Auslasslage im ersten Zwischenraum. Dies kann bedeuten, dass die Einlassöffnung und die erste Auslassöffnung relativ zueinander verdreht und/oder verschoben sind. Beispielsweise können die Einlassöffnung und die Auslassöffnung relativ zu einem gemeinsamen Referenzkoordinatensystem relativ zueinander verschoben und/oder verdreht sein, insbesondere um eine vertikale Achse des Referenzkoordinatensystems verdreht und/oder in mindestens eine Richtung senkrecht zur vertikalen Achse verschoben sein. Die vertikale Achse des Referenzkoordinatensystems kann hierbei parallel zur vorhergehend erläuterten Einlassrichtung orientiert sein. Somit kann ein durch die Einlassöffnung in den ersten Zwischenraum eingeführter Kartenkörper nicht ohne Verschiebung oder Verdrehung durch die erste Auslassöffnung aus dem ersten Zwischenraum ausgeführt werden.

Weiter ist ein im Zwischenraum angeordneter Kartenkörper mittels des Betätigungsmittels aus der Einlasslage im ersten Zwischenraum in die Auslasslage im ersten Zwischenraum verschiebbar und/oder verdrehbar. Hierdurch ergibt sich in vorteilhafter Weise eine einfache mechanische Vereinzelung eines Kartenkörpers aus einem Kartenkörperstapel, wobei insbesondere eine Gefahr einer Haftung der Kartenkörper aneinander beim Vereinzeln reduziert wird. Da die Kartenkörper auch nur wenig gegeneinander bewegt werden müssen, können auch potentiell beim Bewegen des zu vereinzelnden Kartenkörpers entstehende Kratzer sehr viel kürzer sein und insbesondere nur im äußeren Randbereich des Kartenkörpers auftreten. Dadurch stören die Kratzer die Erfassung von in oder auf dem Kartenkörper enthaltenen Informationen, z.B. von Personalisierungsdaten, nicht und werden auch als weniger störend empfunden. Erfindungsgemäß weist die Vorrichtung eine weitere Einlassöffnung und eine weitere Auslassöffnung auf, wobei zwischen der weiteren Einlassöffnung und der weiteren Auslassöffnung ein weiterer Zwischenraum angeordnet ist. Eine weitere Einlassrichtung durch die weitere Einlassöffnung kann parallel oder sogar konzentrisch zur Auslassrichtung orientiert sein, wobei die weitere Einlassöffnung in Transportrichtung auf die ersten Auslassöffnung folgen kann, jedoch noch vor der weiteren Auslassöffnung angeordnet sein kann. Eine Höhe des weiteren Zwischenraums in der weiteren Einlassrichtung kann gleich der oder größer als eine Dicke des Kartenkörpers sein. Auch kann die Höhe des weiteren Zwischenraums in der weiteren Einlassrichtung kleiner als die zweifache Dicke des Kartenkörpers sein. Somit kann der weiteren Zwischenraum zur Aufnahme eines vereinzelten Kartenkörpers dienen. Weiter legt die weitere Einlassöffnung eine Einlasslage im weiteren Zwischenraum fest. Ebenfalls legt die weitere Auslassöffnung eine Auslasslage im weiteren Zwischenraum fest. Die Einlasslage im weiteren Zwischenraum kann gleich der Auslage im weiteren Zwischenraum sein.

Die weitere Einlassöffnung kann gleich der ersten Auslassöffnung sein und/oder ebenfalls vom ersten Auslasskörper ausgebildet oder aufgewiesen werden.

Erfindungsgemäß umfasst Vorrichtung mindestens ein weiteres Betätigungsmittel, wobei eine Bewegung (Ausführbewegung) eines im weiteren Zwischenraum angeordneten Kartenkörpers durch die weitere Auslassöffnung mittels des weiteren Betätigungsmittels freigebbar ist. Das Betätigungsmittel kann beispielsweise in einem Sperr-Zustand die weitere Auslassöffnung teilweise oder vollständig abdecken. Es ist z.B. vorstellbar, dass das Betätigungsmittel nur einen Randbereich oder einen oder mehrere Abschnitte des Randbereichs der weiteren Auslassöffnung abdeckt. Im Sperr-Zustand kann der im weiteren Zwischenraum angeordnete Kartenkörper zumindest teilweise auf dem Betätigungsmittel aufliegen. Das Betätigungsmittel kann in einem Freigabe-Zustand die weitere Auslassöffnung vollständig freigeben. In diesem Zustand kann der im weiteren Zwischenraum angeordnete Kartenkörper durch die weitere Auslassöffnung ausgeführt werden, z.B. hindurchfallen.

Erfindungsgemäß entspricht eine Mittellinie der ersten Auslassöffnung einer Mittellinie der weiteren Einlassöffnung. Weiter kann eine Mittellinie der ersten Auslassöffnung einer Mittellinie der weiteren Auslassöffnung entsprechen. Weiter können die Einlasslage im weiteren Zwischenraum und die Auslasslage im weiteren Zwischenraum derart festgelegt sein, dass sich die weitere Einlasslage und die weitere Auslasslage in einer gemeinsamen Projektionsebene, die senkrecht zur weiteren Einlassrichtung orientiert ist, überdecken. Es ist auch möglich, dass die Auslasslage im ersten Zwischenraum in der gemeinsamen Projektionsebene der Auslasslage im weiteren Zwischenraum entspricht. Durch die weitere Auslassöffnung kann ein Kartenkörper in einer weiteren Auslassrichtung geführt werden, die gleich der Transportrichtung in einem weiteren Teilabschnitt der Trajektorie sein kann. Auch kann die weitere Auslassrichtung parallel zur Einlassrichtung und/oder zur weiteren Einlassrichtung sein, insbesondere auch konzentrisch.

In einer bevorzugten Ausführungsform entspricht eine Mittellinie der Einlassöffnung einer Mittellinie der ersten Auslassöffnung. Die Mittellinie kann insbesondere parallel zur Einlassrichtung orientiert sein. Dies wiederum bedeutet, dass die Einlassöffnung und die Auslassöffnung um die Mittellinie relativ zueinander verdreht sind. Ein Betrag eines Verdrehwinkels kann theoretisch Werte von 0° (ausschließlich) bis 180° (ausschließlich) einnehmen. Vorzugsweise ist ein Verdrehwinkel kleiner als oder gleich 45°, weiter vorzugsweise kleiner als oder gleich 30°, weiter vorzugsweise kleiner als oder gleich 20°, weiter vorzugsweise kleiner als oder gleich 10°.

Sind die Einlassöffnung und die erste Auslassöffnung derart relativ zueinander verdreht, so kann der Kartenkörper in der Einlasslage auf zumindest einem Teil einer Oberfläche des vorhergehend erläuterten Auslasskörpers aufliegen. Dies wird nachfolgend näher erläutert. Je geringer der relative Verdrehwinkel, desto geringer die Auflagefläche und somit die Oberfläche entlang derer der Kartenkörper durch das Betätigungsmittel bewegt wird. Somit kann eine Beschädigung, insbesondere ein Verkratzen, des Kartenkörpers durch Bewegen entlang der Oberfläche reduziert werden.

Somit ergibt sich in vorteilhafter Weise eine besonders einfache Ausbildung der Vorrichtung zur Vereinzelung, insbesondere eine Ausführung, bei der eine Gefahr eines Verkratzens bei der Vereinzelung reduziert wird. Insbesondere können, wenn überhaupt, beim Verdrehen Kratzer nur noch im Eckbereich des Kartenkörpers auftreten. Hierdurch ist eine Beeinträchtigung der Erfassung von in oder auf dem Kartenkörper enthaltenen Informationen durch Kratzer praktisch ausgeschlossen.

In einer weiteren Ausführungsform ist die Einlasslage im ersten Zwischenraum und die Auslasslage im ersten Zwischenraum derart festgelegt, dass sich in einer gemeinsamen Projektionsebene, die senkrecht zur Einlassrichtung orientiert ist, zumindest ein Teil der Einlassöffnung außerhalb der ersten Auslassöffnung angeordnet ist. Dies kann bedeuten, dass ausschließlich ein Teil der Auslassöffnung im ersten Zwischenraum in der Einlassöffnung angeordnet ist. Dies bedeutet anschaulich, dass sich die erste Auslassöffnung und die Einlassöffnung teilweise, jedoch nicht vollständig, überdecken. Weiter kann ausschließlich ein Teil der Einlassöffnung in der ersten Auslassöffnung im ersten Zwischenraum angeordnet sein.

Beispielsweise kann zumindest ein Teil der Einlassöffnung einen Teil des Auslasskörpers umfassen, der die erste Auslassöffnung aufweist oder ausbildet. Dieser zumindest eine Teil des Auslasskörpers kann insbesondere eine Auflagefläche für den zu vereinzelnden Kartenkörper im ersten Zwischenraum aufweisen.

Hierdurch ergibt sich in vorteilhafter Weise, dass der zu vereinzelnde Kartenkörper im ersten Zwischenraum sicher gelagert wird und nicht ungewollt durch die erste Auslassöffnung aus dem ersten Zwischenraum herausfallen kann.

In einer weiteren Ausführungsform sind in einer gemeinsamen Projektionsebene, die senkrecht zur Einlassrichtung orientiert ist, in Eckbereichen und/oder Randbereichen der Einlassöffnung Teile einer Oberfläche eines Auslasskörpers angeordnet, wobei der Auslasskörper die erste Auslassöffnung aufweist oder ausbildet. Dies kann bedeuten, dass in der Projektionsebene mindestens ein Eckbereich und/oder mindestens ein Randbereich der Einlassöffnung außerhalb der ersten Auslassöffnung angeordnet ist.

Somit ergibt sich in vorteilhafter Weise, dass ein Kartenkörper in der Einlasslage im ersten Zwischenraum durch Auflage mindestens einer Ecke, vorzugsweise mehrerer Ecken, und/oder mindestens eines Randes, vorzugsweise mehrerer Ränder, gelagert ist. Hierdurch wird in vor vorteilhafter Weise eine sichere Lagerung im ersten Zwischenraum erreicht.

In einer weiteren Ausführungsform weist das Betätigungsmittel zumindest ein Anschlagelement zum Verschieben und/oder Verdrehen des Kartenkörpers aus der Einlasslage im ersten Zwischenraum in die Auslasslage im ersten Zwischenraum auf. Vorzugsweise kann das Betätigungsmittel mehrere Anschlagelemente aufweisen. Das Betätigungsmittel kann hierbei einen Aktor umfassen, durch den das mindestens eine Anschlagelement derart bewegbar ist, dass durch zumindest einen Teil der Bewegung des Anschlagelements der Kartenkörper aus der Einlasslage im ersten Zwischenraum in die Auslasslage im ersten Zwischenraum verschoben und/oder verdreht wird. Selbstverständlich kann das Betätigungsmittel neben dem Aktor auch geeignete mechanische Kopplungsmittel aufweisen, die den Aktor mit dem mindestens einen Anschlagelement koppeln.

Ein Anschlagelement bezeichnet hierbei ein Element, welches in mechanischem Kontakt mit dem mindestens einen Kartenkörper, insbesondere mit einem Randbereich oder Randpunkt des mindestens einen Kartenkörpers treten kann, um diesen zu verschieben und/oder zu verdrehen.

Selbstverständlich kann die Vorrichtung auch Führungsmittel zur Führung einer Verschiebe- und/oder Verdrehbewegung des Kartenkörpers aufweisen oder ausbilden. Auch kann die Vorrichtung Begrenzungsmittel zur Begrenzung, insbesondere zur mechanischen Begrenzung, der Verschiebung und/oder Verdrehung des Kartenkörpers aufweisen oder ausbilden.

In einer bevorzugten Ausführungsform umfasst das Betätigungsmittel eine Lochscheibe oder ist als Lochscheibe ausgebildet. Die Lochscheibe weist eine Durchgangsöffnung auf. Dimensionen der Durchgangsöffnung können hierbei an Dimensionen des Kartenkörpers angepasst sein, insbesondere wie vorhergehend mit Bezug auf die Einlassöffnung und Auslassöffnung erläutert. Weiter ist die Durchgangsöffnung aus der Einlasslage im ersten Zwischenraum in die erste Auslasslage im ersten Zwischenraum verschiebbar und/oder verdrehbar. Dies kann insbesondere durch Betätigung der Lochscheibe, insbesondere eine Rotation der Lochscheibe, erfolgen. Beispielsweise kann eine Mittellinie der Durchgangsöffnung konzentrisch zu den Mittellinien der Einlass- und ersten Auslassöffnung orientiert sein.

Insbesondere können die Einlassöffnung und/oder die Durchgangsöffnung der Lochscheibe und/oder die Auslassöffnung gleiche Dimensionen aufweisen.

Eine Dicke der Lochscheibe kann gleich einer oder (vorzugsweise) kleiner als die Dicke des Kartenkörpers sein. Beispielsweise kann die Dicke der Lochscheibe der halben Dicke eines Kartenkörpers entsprechen. Hierdurch kann sichergestellt werden, dass durch die Lochscheibe jeweils nur ein Kartenkörper betätigbar ist.

Somit kann als ein Anschlagelement zum Verschieben und/oder Verdrehen des Kartenkörpers derart ausgebildet sein, dass eine Höhe eines Betätigungsbereiches gleich der oder kleiner als eine Dicke des Kartenkörpers ist.

Durch die Verwendung einer Lochscheibe als (Teil eines) Betätigungsmittel(s) ergibt sich in vorteilhafter Weise eine besonders zuverlässige Verschiebung und/oder Verdrehung.

In einer weiteren Ausführungsform ist die Einlasslage im weiteren Zwischenraum ungleich der Auslage im weiteren Zwischenraum. Weiter ist ein im weiteren Zwischenraum angeordneter Kartenkörper mittels des weiteren Betätigungsmittels aus der Einlasslage im weiteren Zwischenraum in die Auslasslage im weiteren Zwischenraum verschiebbar und/oder verdrehbar ist.

Das weitere Betätigungsmittel kann hierbei entsprechend dem ersten Betätigungsmittel ausgebildet sein. Bezüglich der Ausbildung der weiteren Einlassöffnung und der weiteren Auslassöffnung gelten die vorhergehend bezüglich der Einlassöffnung und der ersten Auslassöffnung getätigten Erläuterungen entsprechend, wobei die weitere Einlassöffnung der Einlassöffnung und die weitere Auslassöffnung der ersten Auslassöffnung entspricht.

Erfindungsgemäß entspricht eine Mittellinie der ersten Auslassöffnung einer Mittellinie der weiteren Einlassöffnung und/oder einer Mittellinie der weiteren Auslassöffnung. Weiter kann die Einlasslage im weiteren Zwischenraum und die Auslasslage im weiteren Zwischenraum derart festgelegt sein, dass in einer gemeinsamen Projektionsebene, die senkrecht zur weiteren Einlassrichtung orientiert ist, zumindest ein Teil der weiteren Einlassöffnung außerhalb der weiteren Auslassöffnung angeordnet ist. Weiter kann in einer gemeinsamen Projektionsebene, die senkrecht zur weiteren Einlassrichtung orientiert ist, in mindestens einem Eckbereich und/oder in mindestens einem Randbereich der Einlassöffnung Teile einer Oberfläche eines weiteren Auslasskörpers angeordnet sein, wobei der weitere Auslasskörper die weitere Auslassöffnung aufweist oder ausbildet. Es ist auch möglich, dass die Einlasslage im ersten Zwischenraum in der gemeinsamen Projektionsebene der Auslasslage im weiteren Zwischenraum entspricht. Durch die weitere Auslassöffnung kann ein Kartenkörper in einer weiteren Auslassrichtung geführt werden, die gleich der Transportrichtung in einem weiteren Teilabschnitt der Trajektorie sein kann. Auch kann die weitere Auslassrichtung parallel zur Einlassrichtung und/oder zur weiteren Einlassrichtung sein, insbesondere auch konzentrisch.

In einer weiter bevorzugten Ausführungsform umfasst die Vorrichtung ein Mittel zur Erzeugung thermischer Energie. Das Mittel zur Erzeugung thermischer Energie ist hierbei derart angeordnet und/oder ausgebildet, dass thermische Energie in den weiteren Zwischenraum leitbar ist. Das Mittel zur Erzeugung thermischer Energie kann insbesondere derart ausgebildet sein, dass der weitere Zwischenraum erwärmbar und/oder kühlbar ist. Somit kann das Mittel zur Erzeugung thermischer Energie auch als Mittel zur Entziehung thermischer Energie ausgebildet sein.

Hierdurch kann in vorteilhafter Weise gezielt ein im weiteren Zwischenraum angeordneter Kartenkörper erwärmt werden, insbesondere für einen nachfolgenden Druckvorgang. Auch kann hierdurch ein unterster Kartenkörper im Kartenkörperstapel oder ein im ersten Zwischenraum angeordneter Kartenkörper erwärmt werden, z.B. durch die weitere Einlassöffnung und gegebenenfalls die erste Auslassöffnung hindurch. Hierbei kann z.B. der im weiteren Zwischenraum angeordnete Kartenkörper von oben und der unterste Kartenkörper im Kartenkörperstapel oder der im ersten Zwischenraum angeordnete Kartenkörper von unten erwärmt werden.

In einer weiteren Ausführungsform ist mittels des Mittels zur Erzeugung thermischer Energie thermische Energie in ein Medium, insbesondere Luft, übertragbar, wobei das Medium in den ersten und/oder weiteren Zwischenraum förderbar ist. Beispielsweise kann somit erwärmte Luft in den ersten und/oder weiteren Zwischenraum eingeblasen werden. Hierzu kann die Vorrichtung eine Fördereinrichtung für das Medium umfassen, beispielsweise ein Gebläse. Da der Kartenkörper im weiteren Zwischenraum bereits vereinzelt ist, bietet er in vorteilhafter Weise eine im Vergleich zu einer Anordnung im Kartenkörperstapel große Oberfläche und kann somit effektiv erwärmt oder gekühlt werden. Da die Kartenkörper im ersten und/oder weiteren Zwischenraum die Einlass- und/oder Auslassöffnung zumindest teilweise, insbesondere auch vollständig, abdecken können, kann durch die Öffnungen nur wenig thermische Energie entweichen. Hierdurch wird eine Effizienz der thermischen Energieübertragung erhöht.

Selbstverständlich ist es auch möglich, ein Mittel zur Erzeugung thermischer Energie derart anzuordnen und/oder auszubilden, dass thermische Energie in den ersten Zwischenraum leitbar ist und/oder in einen Bereich des Kartenkörperstapels, beispielsweise durch zumindest einen Teil der weiteren Einlassöffnung und gegebenenfalls der ersten Auslassöffnung.

In einer weiteren Ausführungsform umfasst die Vorrichtung ein Mittel zur Übertragung von Informationen an einen im weiteren Zwischenraum angeordneten Kartenkörper. Das Mittel zur Übertragung kann insbesondere ein Mittel zur RFID-basierten (Radio Frequency Identification basierten) Übertragung von Informationen sein. Insbesondere kann das Mittel zur Übertragung ein Sender sein. Der Kartenkörper kann in diesem Fall ein Mittel zu Empfang und Speicherung der übertragenen Informationen aufweisen. Das Mittel zur Übertragung kann hierbei derart ausgebildet und/oder angeordnet sein, dass Informationen nur oder ausschließlich an einen im weiteren Zwischenraum angeordneten Kartenkörper übertragbar sind. Insbesondere können Informationen zur Personalisierung und/oder Individualisierung gezielt an einen einzelnen im weiteren Zwischenraum angeordneten Kartenkörper übertragen werden.

Weiter vorgeschlagen wird ein Verfahren zur Vereinzelung eines Kartenkörpers aus einem Kartenkörperstapel, wobei der Kartenkörper durch eine Einlassöffnung in eine Einlasslage in einen ersten Zwischenraum geführt wird. Die entsprechende Einführbewegung des Kartenkörpers kann hierbei zumindest teilweise, vorzugsweise ausschließlich, durch Schwerkraft bewirkt werden. Weiter wird der im ersten Zwischenraum angeordnete Kartenkörper aus der Einlasslage im ersten Zwischenraum in eine Auslasslage im ersten Zwischenraum verschoben und/oder verdreht, wobei der Kartenkörper aus der Auslasslage im ersten Zwischenraum durch die erste Auslassöffnung aus dem ersten Zwischenraum ausgeführt ist. Entsprechend der Einführbewegung kann auch die Ausführbewegung aus dem ersten Zwischenraum zumindest teilweise, vorzugsweise ausschließlich, durch Schwerkraft bewirkt werden. Die Einführbewegung kann hierbei in eine Einlassrichtung erfolgen, die parallel zur Gravitationsrichtung sein kann. Die Ausführbewegung kann in eine Auslassrichtung erfolgen, die ebenfalls parallel zur Gravitationsrichtung sein kann.

Insbesondere kann der im ersten Zwischenraum angeordnete Kartenkörper aus der Einlasslage in die Auslasslage verdreht werden, wobei ausschließlich eine Drehbewegung durchgeführt wird.

Weiter wird der Kartenkörper aus der Auslasslage im ersten Zwischenraum durch die erste Auslassöffnung und gegebenenfalls durch eine weitere Einlassöffnung in eine Einlasslage in einen weiteren Zwischenraum eingeführt, wobei der im weiteren Zwischenraum angeordnete Kartenkörper aus einer Auslasslage im weiteren Zwischenraum durch eine weitere Auslassöffnung aus dem weiteren Zwischenraum ausgeführt wird. Auch die Einführbewegung und/oder die Ausführbewegung in bzw. aus dem weiteren Zwischenraum kann hierbei zumindest teilweise, vorzugsweise ausschließlich, durch Schwerkraft bewirkt werden.

Das vorgeschlagene Verfahren kann hierbei mittels einer Vorrichtung gemäß einer der vorhergehend erläuterten Ausführungsformen durchgeführt werden. Gleichzeitig kann die vorgeschlagene Vorrichtung derart ausgebildet sein, dass eines der vorgeschlagenen Verfahren mittels der Vorrichtung durchführbar ist.

Hierdurch ergibt sich in vorteilhafter Weise eine zuverlässige und beschädigungsarme Vereinzelung eines Kartenkörpers aus einem Kartenkörperstapel.

In einer weiteren Ausführungsform wird der im weiteren Zwischenraum angeordnete Kartenkörper aus der Einlasslage im weiteren Zwischenraum in eine Auslasslage im weiteren Zwischenraum verschoben und/oder verdreht wird, wobei der Kartenkörper aus der Auslasslage im weiteren Zwischenraum durch die weitere Auslassöffnung aus dem weiteren Zwischenraum ausgeführt wird. Weiter kann der im weiteren Zwischenraum angeordnete Kartenkörper aus der Einlasslage im weiteren Zwischenraum ausschließlich durch eine Verdrehung in die Auslasslage im weiteren Zwischenraum verdreht werden.

In einer weiteren Ausführungsform wird thermische Energie zu dem im weiteren Zwischenraum angeordneten Kartenkörper übertragen. Insbesondere kann die thermische Energie derart übertragen werden, dass der im weiteren Zwischenraum angeordnete Kartenkörper auf eine gewünschte Temperatur aufgeheizt wird. Selbstverständlich ist es auch vorstellbar, den im weiteren Zwischenraum angeordneten Kartenkörper thermische Energie zu entziehen, beispielsweise um ihn auf eine vorbestimmte Temperatur zu kühlen.

In einer weiteren Ausführungsform werden an einen im weiteren Zwischenraum angeordneten Kartenkörper Informationen übertragen. Dies wurde vorhergehend bereits erläutert.

In dem vorgeschlagenen Verfahren kann das vorgeschlagene Verschieben und/oder Verdrehen des im ersten und/oder weiteren Zwischenraum angeordneten Kartenkörpers bzw. das Freigeben der Ausführbewegung aus dem weiteren Zwischenraum mit einer vorbestimmten Frequenz erfolgen. Die Frequenz kann insbesondere abhängig von einer Taktfrequenz einer Kartenverarbeitungsmaschine sein, beispielsweise einer Druckmaschine. Insbesondere kann eine Frequenz des Verschiebens und/oder Verdrehens bzw. Freigebens derart gewählt werden, dass zwischen einer ersten Verschiebung und/oder Verdrehung in eine Auslasslage und einer nachfolgenden Verschiebung und/oder Verdrehung in die Auslasslage ein Arbeitsgang, beispielsweise ein Druckvorgang, der Kartenverarbeitungsmaschine erfolgt. Somit kann auch ein Erwärmen und/oder Abkühlen des im weiteren Zwischenraum angeordneten Kartenkörpers und/oder ein Übertragen von Informationen an diesen Kartenkörper abhängig von der Taktfrequenz der Kartenverarbeitungsmaschine sein. Somit kann die zugeführte und/oder entzogene thermische Energie derart gewählt sein, dass sich der Kartenkörper während der Dauer eines Arbeitsganges der Kartenverarbeitungsmaschine auf eine gewünschte Temperatur erwärmt oder abkühlt.

Die Erfindung wird anhand eines Ausführungsbeispiels näher erläutert. Die Figuren zeigen:
- Fig. 1: eine schematische Seitenansicht einer erfindungsgemäßen Vorrichtung zur Vereinzelung,
- Fig. 2: einen Querschnitt durch die in Fig. 1 dargestellte Vorrichtung und
- Fig. 3: einen weiteren Querschnitt durch die in Fig. 1 dargestellte Vorrichtung.

Nachfolgend bezeichnen gleiche Bezugszeichen Elemente mit gleichen oder ähnlichen technischen Merkmalen.

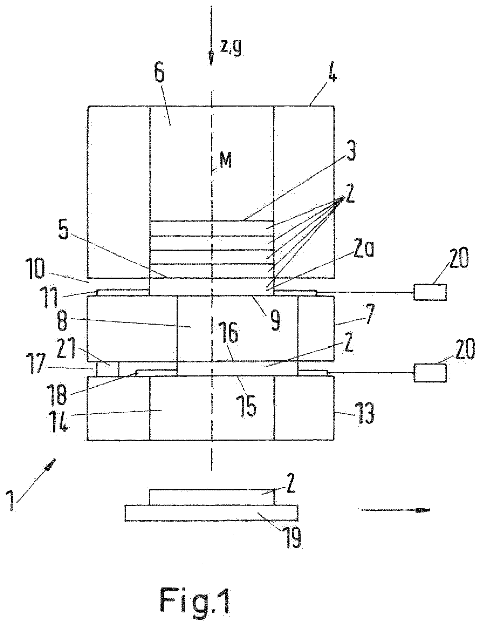

In Fig. 1 ist ein schematischer Querschnitt durch eine Vorrichtung 1 zur Vereinzelung eines Kartenkörpers 2 aus einem Kartenkörperstapel 3 dargestellt. Die Vorrichtung 1 umfasst einen Einlasskörper 4, der ein Aufnahmevolumen 6 für den Kartenkörperstapel 3 ausbildet. Dargestellt ist weiter eine Einlassrichtung z (Transportrichtung), die parallel zu einer Gravitationsrichtung, also einer Richtung der Gravitationskraft g, orientiert ist. Die Transportrichtung z ist somit von oben nach unten orientiert. Am in Einlassrichtung z unteren Ende weist das Aufnahmevolumen 6 eine im Querschnitt rechteckige Einlassöffnung 5 auf, wobei eine Querschnittsebene des Querschnitts senkrecht zur Einlassrichtung z orientiert ist. Dimensionen, insbesondere eine Länge und eine Breite, der Einlassöffnung 5 sind an Dimensionen, insbesondere eine Länge und eine Breite, der Kartenkörper 2 angepasst.

Weiter weist die Vorrichtung 1 einen ersten Auslasskörper 7 auf. Dieser erste Auslasskörper 7 weist wiederum ein erstes Durchgangsvolumen 8 auf. Am oberen, also entlang der Transportrichtung z hinteren, Ende weist das erste Durchgangsvolumen 8 eine erste Auslassöffnung 9 auf, die ebenfalls im Querschnitt rechteckig ausgebildet ist und deren Dimensionen an die Dimensionen der Kartenkörper 2 angepasst sind, wobei die Auslassrichtung parallel zur Einlassrichtung z orientiert ist, insbesondere konzentrisch zu dieser verläuft. Zwischen der Einlassöffnung 5 und der ersten Auslassöffnung 9 ist ein erster Zwischenraum 10 angeordnet. Eine Höhe des ersten Zwischenraums 10 in Einlassrichtung z ist hierbei um ein vorbestimmtes, geringes Maß größer als eine Dicke eines Kartenkörpers 2 in Einlassrichtung z. Im ersten Zwischenraum 10 ist eine erste Lochscheibe 11 angeordnet, die ein Betätigungsmittel für einen Kartenkörper 2 ausbildet. Wird ein Kartenkörper 2a durch die Einlassöffnung 5 in Einlassrichtung z in den ersten Zwischenraum 10 eingeführt, so nimmt der Kartenkörper 2a im ersten Zwischenraum 10 eine durch die Einlassöffnung 5 festgelegte Einlasslage, also eine vorbestimmte Position und Orientierung, ein. In Fig. 1 ist dargestellt, dass der zu vereinzelnde Kartenkörper 2a im ersten Zwischenraum 10 in der Einlasslage mit einem Teil des Kartenkörpers 2a auf einer Oberfläche des ersten Auslasskörpers 7 aufliegt. Die erste Auslassöffnung 9 legt eine Auslasslage im ersten Zwischenraum 10 fest, wobei der Kartenkörper 2a ausschließlich dann aus dem ersten Zwischenraum 10 in Auslassrichtung in das erste Durchgangsvolumen 8 ausführbar ist, wenn der Kartenkörper 2a in die Auslasslage gebracht wird.

In Fig. 1 ist weiter dargestellt, dass eine Mittellinie M der Einlassöffnung 5 und der ersten Auslassöffnung 9 konzentrisch zueinander angeordnet sind. Die Lochscheibe 11 weist ebenfalls eine Durchgangsöffnung 12 auf, deren Mittellinie ebenfalls konzentrisch zur Mittellinie M angeordnet ist. Durch eine Verdrehung der Lochscheibe 11 um die Mittellinie M wird der Kartenkörper 2a aus der Einlasslage in die Auslasslage des ersten Zwischenraums 10 verdreht. Aus der Auslasslage kann er, insbesondere aufgrund der wirkenden Gravitationskraft g, in das erste Durchgangsvolumen 8 hineinfallen.

Weiter ist dargestellt, dass die Vorrichtung 1 einen weiteren Auslasskörper 13 umfasst, der ein weiteres Durchgangsvolumen 14 aufweist. Das weitere Durchgangsvolumen 14 weist an einem oberen, also entlang der Transportrichtung z hinteren, Ende eine weitere Auslassöffnung 15 auf. Das erste Durchgangsvolumen 8 weist an einem unteren, also entlang der Transportrichtung z vorderen, Ende eine weitere Einlassöffnung 16 auf. Zwischen dem ersten Auslasskörper 7 und dem weiteren Auslasskörper 13 ist ein weiterer Zwischenraum 17 angeordnet, dessen Höhe in Transportrichtung z wieder um ein vorbestimmtes geringes Maß größer ist als die Dicke eines Kartenkörpers 2. Entsprechend der vorher getätigten Ausführungen legt die weitere Einlassöffnung 16 eine Einlasslage im weiteren Zwischenraum 17 fest. Die weitere Auslassöffnung 15 legt eine Auslasslage im weiteren Zwischenraum 17 fest. In einer gemeinsamen Projektionsebene, die senkrecht zu der Transportrichtung z orientiert sein kann, entspricht die Einlasslage im ersten Zwischenraum 10 der Auslasslage im weiteren Zwischenraum 17.

Weiter umfasst die Vorrichtung 1 eine weitere Lochscheibe 18, die ein weiteres Betätigungsmittel für einen Kartenkörper 2 im weiteren Zwischenraum 17 ausbildet. Mittels der weiteren Lochscheibe 18 ist ein im weiteren Zwischenraum 17 angeordneter Kartenkörper 2 aus der Einlasslage im weiteren Zwischenraum 17 in die Auslasslage im weiteren Zwischenraum 17 verdrehbar, wobei der im weiteren Zwischenraum 17 in der Auslasslage angeordnete Kartenkörper 2 dann durch das weitere Durchgangsvolumen 14 in der weiteren Auslassrichtung hindurch bewegt werden kann. Unter einem unteren, also in Transportrichtung z vorderen, Ende des weiteren Durchgangsvolumens 14 ist ein Transporttisch 19 dargestellt, auf den der Kartenkörper 2 aus dem weiteren Durchgangsvolumen 14 fällt.

In Fig. 1 sind ebenfalls zwei Aktoren 20 dargestellt, die jeweils mit den Lochscheiben 11, 18 mechanisch gekoppelt sind und eine Drehbewegung der Lochscheiben 11, 18 bewirken können.

Weiter ist in Fig.1 eine Heizgebläseeinrichtung 21 dargestellt, die im weiteren Zwischenraum 17 angeordnet ist und thermische Energie in den weiteren Zwischenraum 17 transportieren kann. Durch diese thermische Energie kann ein im weiteren Zwischenraum 17 angeordneter Kartenkörper 2 erwärmt werden, bevor er durch das weitere Durchgangsvolumen 14 auf den Transporttisch 19 bewegt wird.

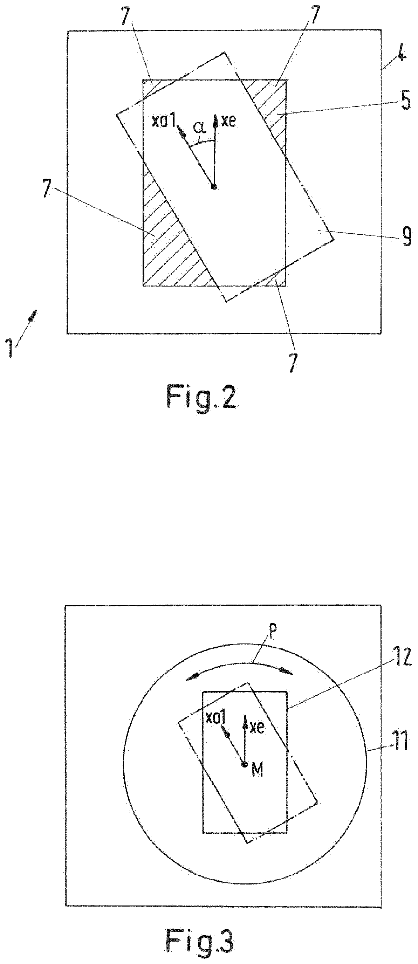

Fig. 2 zeigt einen Querschnitt durch die in Fig. 1 dargestellte Vorrichtung 1, wobei eine Querschnittsebene senkrecht zu der in Fig. 1 dargestellten Transportrichtung oder Einlassrichtung z orientiert ist, die in Fig. 2 in die Zeichenebene hinein orientiert ist. Dargestellt ist eine Längsachse xe der Einlassöffnung 5. Weiter dargestellt ist die erste Auslassöffnung 9 sowie eine Oberfläche des ersten Auslasskörpers 7. Ebenfalls dargestellt ist eine Längsachse xa1 der ersten Auslassöffnung 9. Hierbei kann die Längsachse xe der Einlassöffnung 5 parallel zu einer longitudinalen Achse eines gemeinsamen Referenzkoordinatensystems orientiert sein, wobei die in Fig. 1 dargestellte Transportrichtung oder Einlassrichtung z eine vertikale Achse des Referenzkoordinatensystems ausbildet. In diesem Referenzkoordinatensystem ist die erste Auslassöffnung 9, insbesondere die Längsachse xa1 der ersten Auslassöffnung 9, um einen vorbestimmten Winkel α um die vertikale Achse relativ zur Einlassöffnung 5, insbesondere zur Längsachse xe der Einlassöffnung 5, verdreht. Mittelpunkte der Einlassöffnung 5 und der ersten Auslassöffnung 9 sind nur in Einlassrichtung oder Transportrichtung z beabstandet zueinander angeordnet, insbesondere weisen die Mittelpunkte keinen longitudinalen Versatz und keinen lateralen Versatz auf, wobei eine nicht dargestellte laterale Achse des Referenzkoordinatensystems senkrecht zu der longitudinalen und vertikalen Achse orientiert ist.

Die schraffiert dargestellten Bereiche der Oberfläche des ersten Auslasskörpers 7 bilden Auflageflächen für eine in der Einlasslage im ersten Zwischenraum 10 angeordneten Kartenkörper 2a (siehe Fig. 1). Somit ist erkennbar, dass ein solcher Kartenkörper 2a nur dann durch die erste Auslassöffnung 9 aus dem ersten Zwischenraum 10 ausgeführt werden kann, wenn er um den Winkel α um die Mittellinie M verdreht wird.

In Fig. 3 ist ein weiterer Querschnitt durch die in Fig. 1 dargestellte Vorrichtung 1 dargestellt. Insbesondere ist hierbei die erste Lochscheibe 11 dargestellt, die eine Durchgangsöffnung 12 aufweist. Die Lochscheibe 11 ist hierbei in einem Einlasszustand dargestellt, in welcher die Durchgangsöffnung 12 der ersten Lochscheibe 11 sich in der Einlasslage im ersten Zwischenraum befindet. Durch einen Pfeil P ist eine mögliche Drehbewegung der ersten Lochscheibe 11 angedeutet. Die erste Lochscheibe 11 kann somit um eine Mittellinie M verdreht werden, wodurch die erste Durchgangsöffnung 12 in einen Auslasszustand im ersten Zwischenraum 10 gebracht werden kann.

Die in Bezug auf die in Fig. 2 und Fig. 3 dargestellten Ausführungsformen getätigten Erläuterungen gelten hierbei in entsprechender Weise selbstverständlich auch für die weitere Einlassöffnung 16, die weitere Auslassöffnung 15 sowie die weitere Lochscheibe 18.

### Bezugszeichenliste

- 1: Vorrichtung
- 2: Kartenkörper
- 2a: Kartenkörper
- 3: Kartenkörperstapel
- 4: Einlasskörper
- 5: Einlassöffnung
- 6: Aufnahmevolumen
- 7: erster Auslasskörper
- 8: erstes Durchgangsvolumen
- 9: erste Auslassöffnung
- 10: erster Zwischenraum
- 11: erste Lochscheibe
- 12: Durchgangsöffnung
- 13: weiterer Auslasskörper
- 14: weiteres Durchgangsvolumen
- 15: weitere Auslassöffnung
- 16: weitere Einlassöffnung
- 17: weiterer Zwischenraum
- 18: weitere Lochscheibe
- 19: Transporttisch
- 20: Aktor
- 21: Heizgebläseeinrichtung
- z: Einlassrichtungrichtung, Transportrichtung
- g: Gravitationskraft
- xe: Längsachse
- xa1: Längsachse
- M: Mittellinie
- P: Pfeil

## Patentansprüche

1. Vorrichtung zur Vereinzelung eines Kartenkörpers (2, 2a) aus einem Kartenkörperstapel (3), wobei die Vorrichtung (1) eine Einlassöffnung (5) aufweist, wobei die Vorrichtung (1) mindestens ein Betätigungsmittel aufweist, wobei die Vorrichtung (1) eine erste Auslassöffnung (9) aufweist, wobei zwischen der Einlassöffnung (5) und der ersten Auslassöffnung (9) ein erster Zwischenraum (10) angeordnet ist, wobei die Einlassöffnung (5) eine Einlasslage im ersten Zwischenraum (10) festlegt, wobei die erste Auslassöffnung (9) eine Auslasslage im ersten Zwischenraum (10) festlegt, wobei die Einlasslage im ersten Zwischenraum (10) ungleich der Auslasslage im ersten Zwischenraum (10) ist, wobei ein im ersten Zwischenraum (10) angeordneter Kartenkörper (2a) mittels des Betätigungsmittels aus der Einlasslage im ersten Zwischenraum (10) in die Auslasslage im ersten Zwischenraum (10) verschiebbar und/oder verdrehbar ist, wobei die Vorrichtung (1) eine weitere Einlassöffnung (16) und eine weitere Auslassöffnung (15) aufweist, wobei zwischen der weiteren Einlassöffnung (16) und der weiteren Auslassöffnung (15) ein weiterer Zwischenraum (17) angeordnet ist, **dadurch gekennzeichnet, dass** die weitere Einlassöffnung (16) eine Einlasslage im weiteren Zwischenraum (17) festlegt, wobei die weitere Auslassöffnung (15) eine Auslasslage im weiteren Zwischenraum (17) festlegt, wobei die Vorrichtung (1) mindestens ein weiteres Betätigungsmittel umfasst, wobei eine Bewegung eines im weiteren Zwischenraum (17) angeordneten Kartenkörpers (2) durch die weitere Auslassöffnung mittels des weiteren Betätigungsmittels freigebbar ist, wobei eine Mittellinie der ersten Auslassöffnung (9) einer Mittellinie der weiteren Einlassöffnung (16) entspricht.

2. Vorrichtung nach Anspruch 1, **dadurch gekennzeichnet, dass** eine Mittellinie (M) der Einlassöffnung (5) einer Mittellinie (M) der ersten Auslassöffnung (9) entspricht.

3. Vorrichtung nach einem der Ansprüche 1 oder 2, **dadurch gekennzeichnet, dass** die Einlasslage im ersten Zwischenraum (10) und die Auslasslage im ersten Zwischenraum (10) derart festgelegt sind, dass in einer gemeinsamen Projektionsebene, die senkrecht zu einer Einlassrichtung (z) orientiert ist, zumindest ein Teil der Einlassöffnung (5) außerhalb der ersten Auslassöffnung (9) angeordnet ist.

4. Vorrichtung nach einem der Ansprüche 1 bis 3, **dadurch gekennzeichnet, dass** in einer gemeinsamen Projektionsebene, die senkrecht zu einer Einlassrichtung (z) orientiert ist, in mindestens einem Eckbereich und/oder in mindestens einem Randbereich der Einlassöffnung (5) Teile einer Oberfläche eines ersten Auslasskörpers (7) angeordnet sind, wobei der erste Auslasskörper (7) die erste Auslassöffnung (9) aufweist oder ausbildet.

5. Vorrichtung nach einem der Ansprüche 1 bis 4, **dadurch gekennzeichnet, dass** das Betätigungsmittel zumindest ein Anschlagelement zum Verschieben und/oder Verdrehen des Kartenkörpers (2a) aus der Einlasslage im ersten Zwischenraum (10) in die Auslasslage im ersten Zwischenraum (10) aufweist.

6. Vorrichtung nach einem der Ansprüche 1 bis 5, **dadurch gekennzeichnet, dass** das Betätigungsmittel eine Lochscheibe (11) umfasst oder als Lochscheibe (11) ausgebildet ist, wobei die Lochscheibe (11) eine Durchgangsöffnung (12) aufweist, wobei die Durchgangsöffnung (12) aus der Einlasslage im ersten Zwischenraum (10) in die Auslasslage im ersten Zwischenraum (10) verschiebbar und/oder verdrehbar ist.

7. Vorrichtung nach einem der Ansprüche 1 bis 6, **dadurch gekennzeichnet, dass** die Einlasslage im weiteren Zwischenraum (17) ungleich der Auslasslage im weiteren Zwischenraum (17) ist, wobei ein im weiteren Zwischenraum (17) angeordneter Kartenkörper (2) mittels des weiteren Betätigungsmittels aus der Einlasslage im weiteren Zwischenraum (17) in die Auslasslage im weiteren Zwischenraum (17) verschiebbar und/oder verdrehbar ist.

8. Vorrichtung nach Anspruch 7, **dadurch gekennzeichnet, dass** die Vorrichtung (1) ein Mittel zur Erzeugung thermischer Energie umfasst, wobei das Mittel zur Erzeugung thermischer Energie derart angeordnet und/oder ausgebildet ist, dass thermische Energie in den weiteren Zwischenraum (17) leitbar ist.

9. Vorrichtung nach Anspruch 8, **dadurch gekennzeichnet, dass** mittels des Mittels zur Erzeugung thermischer Energie thermische Energie in ein Medium übertragen wird, wobei das Medium in den weiteren Zwischenraum (17) förderbar ist.

10. Vorrichtung nach Anspruch 7 bis 9, **dadurch gekennzeichnet, dass** die Vorrichtung ein Mittel zur Übertragung von Informationen an einen im weiteren Zwischenraum (17) angeordneten Kartenkörper (2) umfasst.

11. Verfahren zur Vereinzelung eines Kartenkörpers (2, 2a) aus einem Kartenkörperstapel (3), wobei der Kartenkörper (2, 2a) durch eine Einlassöffnung (5) in eine Einlasslage in einen ersten Zwischenraum (10) eingeführt wird, wobei der im ersten Zwischenraum (10) angeordnete Kartenkörper (2a) aus der Einlasslage im ersten Zwischenraum (10) in eine Auslasslage im ersten Zwischenraum (10) verschoben und/oder verdreht wird, wobei der Kartenkörper (2a) aus der Auslasslage im ersten Zwischenraum (1) durch die erste Auslassöffnung (9) aus dem ersten Zwischenraum (10) ausgeführt wird, wobei der Kartenkörper (2) aus der Auslasslage im ersten Zwischenraum (10) durch die erste Auslassöffnung (9) in eine Einlasslage in einen weiteren Zwischenraum (17) eingeführt wird, wobei der im weiteren Zwischenraum (17) angeordnete Kartenkörper (2) durch eine weitere Auslassöffnung (15) aus dem weiteren Zwischenraum (17) ausgeführt wird, wobei eine Mittellinie der ersten Auslassöffnung (9) einer Mittellinie der weiteren Einlassöffnung (16) entspricht.

12. Verfahren nach Anspruch 11, **dadurch gekennzeichnet, dass** der im weiteren Zwischenraum (17) angeordnete Kartenkörper (2) aus der Einlasslage im weiteren Zwischenraum (17) in eine Auslasslage im weiteren Zwischenraum (17) verschoben und/oder verdreht wird, wobei der Kartenkörper (2) aus der Auslasslage im weiteren Zwischenraum (17) durch eine weitere Auslassöffnung (15) aus dem weiteren Zwischenraum (17) ausgeführt wird.

13. Verfahren nach Anspruch 11 oder 12, **dadurch gekennzeichnet, dass** thermische Energie zu dem im weiteren Zwischenraum (17) angeordneten Kartenkörper (2) übertragen wird.

14. Verfahren nach einem der Ansprüche 11 bis 13, **dadurch gekennzeichnet, dass** an einen im weiteren Zwischenraum (17) angeordneten Kartenkörper (2) Informationen übertragen werden.

## Claims

1. Device for individualising a cardboard element (2, 2a) from a cardboard element stack (3), wherein the device (1) comprises an inlet opening (5), wherein the device (1) comprises at least one actuating means, wherein the device (1) comprises a first outlet opening (9), wherein a first intermediate area (10) is arranged between the inlet opening (5) and the first outlet opening (9), wherein the inlet opening (5) determines an inlet position in the first intermediate area (10), wherein the first outlet opening (9) determines an outlet position in the first intermediate area (10), wherein the inlet position in the first intermediate area (10) is different from the outlet position in the first intermediate area (10), wherein a cardboard element (2a) arranged in the first intermediate area (10) can be moved and/or rotated by means of the actuating means out of the inlet position in the first intermediate area (10) into the outlet position in the first intermediate area (10),
wherein the device (1) comprises a further inlet opening (16) and a further outlet opening (15), wherein a further intermediate area (17) is arranged between the further inlet opening (16) and the further outlet opening (15),
**characterised in that**
the further inlet opening (16) determines an inlet position in the further intermediate area (17), wherein the further outlet opening (15) determines an outlet position in the further intermediate area (17), wherein the device (1) comprises at least one further actuating means, wherein a movement of a cardboard element (2) arranged in the further intermediate space (17) through the further outlet opening can be released by means of the further actuating means, wherein a centerline of the first outlet opening (9) corresponds to a centerline of the further inlet opening (16).

2. Device according to claim 1, **characterised in that** a centerline (M) of the inlet opening (5) corresponds to a centerline (M) of the first outlet opening (9).

3. Device according to claim 1 or 2, **characterised in that** the inlet position in the first intermediate area (10) and the outlet position in the first intermediate area (10) are determined in such a way that at least a part of the inlet opening (5) is arranged outside the first outlet opening (9) in a common projection plane, which is oriented perpendicular to an inlet direction (z).

4. Device according to any one of claims 1 to 3, **characterised in that**, in a common projection plane which is oriented perpendicular to an inlet direction (z), parts of a surface of a first outlet element (7) are arranged in at least one corner area and/or in at least one peripheral area of the inlet opening (5), wherein the first outlet element (7) comprises or forms the first outlet opening (9).

5. Device according to any one of claims 1 to 4, **characterised in that** the actuating means comprises at least one stop element for moving and/or rotating the cardboard element (2a) out of the inlet position in the first intermediate area (10) into the outlet position in the first intermediate area (10).

6. Device according to any one of claims 1 to 5, **characterised in that** the actuating means comprises a perforated disk (11) or is formed as a perforated disk (11), wherein the perforated disk (11) comprises a passage opening (12), wherein the passage opening (12) can be moved and/or rotated out of the inlet position in the first intermediate area (10) into the outlet position in the first intermediate area (10).

7. Device according to any one of claims 1 to 6, **characterised in that** the inlet position in the further intermediate area (17) is different from the outlet position in the further intermediate area (17), wherein a cardboard element (2), arranged in the further intermediate area (17), can be moved and/or rotated by means of the further actuating means out of the inlet position in the further intermediate area (17) into the outlet position in the further intermediate area (17).

8. Device according to claim 7, **characterised in that** the device (1) comprises a means for producing thermal energy, wherein the means for producing thermal energy is arranged and/or formed in such a way that thermal energy can be conducted into the further intermediate area (17).

9. Device according to claim 8, **characterised in that**, by means of the means for producing thermal energy, thermal energy is transferred into a medium, wherein the medium can be conveyed into the further intermediate area (17).

10. Method according to any one of claims 7 to 9, **characterised in that** the device comprises a means for the transferring of information to a cardboard element (2) arranged in the further intermediate area (17).

11. Method for individualising a cardboard element (2, 2a) from a cardboard element stack (3), wherein the cardboard element (2, 2a) is guided through an inlet opening (5) into an inlet position in a first intermediate area (10), wherein the cardboard element (2a) arranged in the first intermediate area (10) is moved and/or rotated out of the inlet position in the first intermediate area (10) into an outlet position in the first intermediate area (10), wherein the cardboard element (2a) is guided out of the outlet position in the first intermediate area (1), through the first outlet opening (9), out of the first intermediate area (10),
wherein the cardboard element (2) is guided out of the outlet position in the first intermediate area (10) through the first outlet opening (9) into a first inlet position in a further intermediate area (17), wherein the cardboard element (2) arranged in the further intermediate area (17) is guided through a further outlet opening (15) out of the further intermediate area (17), wherein a centerline of the first outlet opening (9) corresponds to a centerline of the further inlet opening (16).

12. Method according to claim 11, **characterised in that** the cardboard element (2) arranged in the further intermediate area (17) is moved and/or rotated out of the inlet position in the further intermediate area (17) into an outlet position in the further intermediate area (17), wherein the cardboard element (2) is guided out of the outlet position in the further intermediate area (17) through a further outlet opening (15) out of the further intermediate area (17).

13. Method according to any one of claims 11 or 12, **characterised in that** thermal energy is transferred to the cardboard element (2) arranged in the further intermediate area (17).

14. Method according to any one of claims 11 to 13, **characterised in that** information is transferred to a cardboard element (2) arranged in the further intermediate area (17).

## Revendications

1. Dispositif servant à isoler un corps de carte (2, 2a) d'une pile de corps de carte (3), dans lequel le dispositif (1) présente une ouverture d'entrée (5), dans lequel le dispositif (1) présente au moins un moyen d'actionnement, dans lequel le dispositif (1) présente une première ouverture de sortie (9), dans lequel un premier espace intermédiaire (10) est disposé entre l'ouverture d'entrée (5) et la première ouverture de sortie (9), dans lequel l'ouverture d'entrée (5) fixe une position d'entrée dans le premier espace intermédiaire (10), dans lequel la première ouverture de sortie (9) fixe une position de sortie dans le premier espace intermédiaire (10), dans lequel la position d'entrée dans le premier espace intermédiaire (10) n'est pas identique à la position de sortie dans le premier espace intermédiaire (10), dans lequel un corps de carte (2a) disposé dans le premier espace intermédiaire (10) peut être coulissé et/ou tourné au moyen du moyen d'actionnement depuis la position d'entrée dans le premier espace intermédiaire (10) dans la position de sortie dans le premier espace intermédiaire (10),
dans lequel le dispositif (1) présente une autre ouverture d'entrée (16) et une autre ouverture de sortie (15), dans lequel un autre espace intermédiaire (17) est disposé entre l'autre ouverture d'entrée (16) et l'autre ouverture de sortie (15),
**caractérisé en ce que**
l'autre ouverture d'entrée (16) fixe une position d'entrée dans l'autre espace intermédiaire (17), dans lequel l'autre ouverture de sortie (15) fixe une position de sortie dans l'autre espace intermédiaire (17), dans lequel le dispositif (1) comprend au moins un autre moyen d'actionnement, dans lequel un déplacement d'un corps de carte (2) disposé dans l'autre espace intermédiaire (17) à travers l'autre ouverture de sortie peut être débloqué au moyen de l'autre moyen d'actionnement, dans lequel une ligne médiane de la première ouverture de sortie (9) correspond à une ligne médiane de l'autre ouverture d'entrée (16).

2. Dispositif selon la revendication 1, **caractérisé en ce qu'**une ligne médiane (M) de l'ouverture d'entrée (5) correspond à une ligne médiane (M) de la première ouverture de sortie (9).

3. Dispositif selon l'une quelconque des revendications 1 ou 2, **caractérisé en ce que** la position d'entrée dans le premier espace intermédiaire (10) et la position de sortie dans le premier espace intermédiaire (10) sont fixées de telle manière qu'au moins une partie de l'ouverture d'entrée (5) est disposée à l'extérieur de la première ouverture de sortie (9) dans un plan de projection commun, qui est orienté de manière perpendiculaire par rapport à une direction d'entrée (z).

4. Dispositif selon l'une quelconque des revendications 1 à 3, **caractérisé en ce que** des parties d'une surface d'un premier corps de sortie (7) sont disposées dans un plan de projection commun, qui est orienté de manière perpendiculaire par rapport à une direction d'entrée (z), dans au moins une zone d'angle et/ou dans au moins une zone de bord de l'ouverture d'entrée (5), dans lequel le premier corps de sortie (7) présente ou réalise la première ouverture de sortie (9).

5. Dispositif selon l'une quelconque des revendications 1 à 4, **caractérisé en ce que** le moyen d'actionnement présente au moins un élément de butée servant à faire coulisser et/ou tourner le corps de carte (2a) depuis la position d'entrée dans le premier espace intermédiaire (10) dans la position de sortie dans le premier espace intermédiaire (10).

6. Dispositif selon l'une quelconque des revendications 1 à 5, **caractérisé en ce que** le moyen d'actionnement comprend un disque perforé (11) ou est réalisé en tant que disque perforé (11), dans lequel le disque perforé (11) présente une ouverture de passage (12), dans lequel l'ouverture de passage (12) peut être coulissée et/ou tournée depuis la position d'entrée dans le premier espace intermédiaire (10) dans la position de sortie dans le premier espace intermédiaire (10).

7. Dispositif selon l'une quelconque des revendications 1 à 6, **caractérisé en ce que** la position d'entrée dans l'autre espace intermédiaire (17) n'est pas identique à la position de sortie dans l'autre espace intermédiaire (17), dans lequel un corps de carte (2) disposé dans l'autre espace intermédiaire (17) peut être coulissé et/ou tourné au moyen de l'autre moyen d'actionnement depuis la position d'entrée dans l'autre espace intermédiaire (17) dans la position de sortie dans l'autre espace intermédiaire (17).

8. Dispositif selon la revendication 7, **caractérisé en ce que** le dispositif (1) comprend un moyen servant à générer une énergie thermique, dans lequel le moyen servant à générer une énergie thermique est disposé et/ou réalisé de telle manière qu'une énergie thermique peut être acheminée dans l'autre espace intermédiaire (17).

9. Dispositif selon la revendication 8, **caractérisé en ce qu'**une énergie thermique est transférée dans un milieu au moyen du moyen servant à générer une énergie thermique, dans lequel le milieu peut être refoulé dans l'autre espace intermédiaire (17).

10. Dispositif selon les revendications 7 à 9, **caractérisé en ce que** le dispositif comprend un moyen servant à transférer des informations à un corps de carte (2) disposé dans l'autre espace intermédiaire (17).

11. Procédé servant à isoler un corps de carte (2, 2a) d'une pile de corps de carte (3), dans lequel le corps de carte (2, 2a) est introduit par une ouverture d'entrée (5) dans une position d'entrée dans un premier espace intermédiaire (10), dans lequel le corps de carte (2a) disposé dans le premier espace intermédiaire (10) est coulissé et/ou tourné depuis la position d'entrée dans le premier espace intermédiaire (10) dans une position de sortie dans le premier espace intermédiaire (10), dans lequel le corps de carte (2a) est guidé hors du premier espace intermédiaire (10) depuis la position de sortie dans le premier espace intermédiaire (1) à travers la première ouverture de sortie (9),
dans lequel le corps de carte (2) est introduit depuis la position de sortie dans le premier espace intermédiaire (10) à travers la première ouverture de sortie (9) dans une position d'entrée dans un autre espace intermédiaire (17), dans lequel le corps de carte (2) disposé dans l'autre espace intermédiaire (17) est guidé hors de l'autre espace intermédiaire (17) par une autre ouverture de sortie (15), dans lequel une ligne médiane de la première ouverture de sortie (9) correspond à une ligne médiane de l'autre ouverture d'entrée (16).

12. Procédé selon la revendication 11, **caractérisé en ce que** le corps de carte (2) disposé dans l'autre espace intermédiaire (17) est coulissé et/ou tourné depuis la position d'entrée dans l'autre espace intermédiaire (17) dans une position de sortie dans l'autre espace intermédiaire (17), dans lequel le corps de carte (2) est guidé hors de l'autre espace intermédiaire (17) depuis la position de sortie dans l'autre espace intermédiaire (17) par une autre ouverture de sortie (15).

13. Procédé selon la revendication 11 ou 12, **caractérisé en ce qu'**une énergie thermique est transférée au corps de corps (2) disposé dans l'autre espace intermédiaire (17).

14. Procédé selon l'une quelconque des revendications 11 à 13, **caractérisé en ce que** des informations sont transférées à un corps de carte (2) disposé dans l'autre espace intermédiaire (17).
